# EUROPEAN PATENT SPECIFICATION

(11) **EP 3 456 574 B1**
(45) Date of publication and mention of the grant of the patent: **21.07.2021**
(21) Application number: 18194935.5
(22) Date of filing: 17.09.2018
(51) Int. Cl.: B60K 35/00, G02B 27/01

(54) **METHOD AND SYSTEM FOR DISPLAYING VIRTUAL REALITY INFORMATION IN A VEHICLE**
VERFAHREN UND SYSTEM ZUR ANZEIGE VON VIRTUAL-REALITY-INFORMATIONEN IN EINEM FAHRZEUG
PROCÉDÉ ET SYSTÈME POUR AFFICHER DES INFORMATIONS DE RÉALITÉ VIRTUELLE DANS UN VÉHICULE

(30) Priority: 15.09.2017 ES 201731119
(43) Date of publication of application: 20.03.2019
(73) Proprietor: Seat, S.A., 08760 Martorell (ES)
(72) Inventor: MORENO PAREJO, Alejandro, 08760 Martorell, Barcelona (ES)
(74) Representative: Elzaburu S.L.P.

(56) References cited:
- EP-A1- 2 456 203
- GB-A- 2 535 536
- US-A1- 2015 202 962
- US-B1- 7 180 476

## Description

### SUBJECT MATTER OF THE INVENTION

The present patent application relates to a method for displaying virtual reality information in a vehicle, according to Claim 1, which incorporates notable innovations and advantages, along with a system for displaying virtual reality information in a vehicle, according to Claim 16.

### BACKGROUND OF THE INVENTION

These days, vehicles have cameras that capture images with information on the user's environment, both the interior passenger compartment, and the area outside the vehicle. Said information, present in the user's environment, may be processed with the aim of improving the display thereof by means of a virtual reality device, so as to provide various functionalities to the user. There is thus a need for the user of a vehicle to perceive his environment in a filtered manner, in which images and information, which are less accessible from the user's viewpoint, are displayed clearly and as a function of the importance and priority thereof, at any time during driving.

As can be seen from DE102016008231, the prior art includes a method for generating a virtual view of a vehicle, which has a plurality of cameras, and a unit for processing images, which are superposed on the field of vision of the head of an occupant of the vehicle. A virtual image is created in virtual reality glasses.

Said document describes the steps of: i) capturing images of the area outside the vehicle using external cameras, ii) processing said captured images, iii) superposing the images processed on the field of vision of the occupant, and iv) displaying these images in virtual reality glasses. The factors taken into account for the above steps are: the movement of the vehicle and/or elements outside the vehicle, the position and orientation of the glasses inside the vehicle, the capture by an internal camera that detects the movement of markers on the glasses, processing of images from a camera belonging to said glasses, and values taken by the inertial sensors belonging to the virtual reality glasses.

Note that, when generating a virtual environment, account is not taken of the possibility that there may be intermediate objects or elements present in the vehicle passenger compartment which could come between, for example, the user and a dashboard of the vehicle, or between the user and the vehicle windscreen. Examples of such intermediate elements may be the hands and arms of the driver of the vehicle himself, a passenger inside the vehicle, the interior decor of the vehicle, objects such as money or credit cards which the user has to handle during driving, etc. Failure to detect and subsequently display these intermediate elements in the virtual environment may cause problems in that the user does not know exactly what he is touching, or what the distance is before he touches the screen, something which can lead to inaccuracies or even damage to the vehicle passenger compartment, or to the driver himself.

Therefore, in light of all of the above, there is clearly also a need to have a method and system for displaying virtual reality information in a vehicle, such that it is possible to classify the parts of the image received by a camera located at the viewpoint of the user so that it may modify this information to offer additional functionalities.
GB2535536A describes a method comprising: obtaining information associated with a vehicle or an external image data of a region proximal to the vehicle; and displaying on a wearable display device a graphical representation of a component of the vehicle which depicts a characteristic related to the obtained information or displaying the external image; wherein the display device overlies a portion of the vehicle and makes said portion appear at least partially transparent. The wearable display device may be a spectacle based display. Both the graphical representation of the component and the external image may be displayed to overlap a portion of the vehicle. A delay may be introduced to the external image data before it is displayed. The portion of the vehicle which is overlapped may be the bonnet 520. The graphical representation may be the wheels of the vehicle 550 and the information may be the steering angle of the wheels. The external image may be obtained by one or more downwards facing cameras.
EP2456203A1 describes a see-through side view monitor system including a camera, an external monitor, and an image processing controller having an image deformation unit configured to perform point-of-view conversion on a real camera image signal inputted from the camera into a blind-spot image that is viewed from the position of the driver's point of view, a vehicle cabin image formation unit configured to form a vehicle cabin image that is viewed from the position of the driver's point of view, an image composition device configured to generate a transparent display image showing a blind-spot image transmitted through a semi-see-through vehicle cabin image, and an image composition device configured to generate an animation display image showing the blind-spot image to be shifted stepwise from the vehicle cabin image.
US2015/202962A1 describes a method and system for providing an augmented reality vehicle interface; the method includes providing an augmented reality user interface. The method and system additionally include receiving an image of a vehicle with an image capturing device. The method and system additionally include identifying a user classification category of the user that is capturing an image of the vehicle. Additionally, the method and system include presenting an augmented reality image of the vehicle by overlaying one or more virtual user interface objects on the points of interest. The method and system also includes controlling vehicle features via the one or more virtual user interface objects.
US7180476B1 describes a multiple-sensor vision system for use on vehicles or aircraft. The system utilizes a plurality of fixed sensors, such as infrared sensors, that provide signals that are recorded on tape and/or stored in memory. A processor digitally samples the stored images and provides output to a helmet-mounted display. Desirably, the sensors are arrayed in series such that their images may be juxtaposed and blended to provide a wider field-of-view image. A tracking system desirably monitors the head position of the operator, which position is then used to select various images from the processor. In this way, the operator can select various views by simply looking in that direction. In one embodiment, the array of sensors is forward-looking and positioned close to the head position of the operator to minimize parallax issues. In addition to forward-looking sensors, other sensors mounted around the vehicle/aircraft may provide rearward, hemispherical, or complete spherical coverage. Sensors that monitor the status of various instruments on board the vehicle can also provide input to the helmet-mounted display, including a moving map tile that is displayed below or to the side of the main image.

### DESCRIPTION OF THE INVENTION

The present invention consists of a method and system for displaying virtual reality information in a vehicle, by means of a virtual reality device, in which images with relevant information are displayed to the user, framed within his field of vision. Usually, the virtual reality device will consist of virtual reality glasses.

Thus, to enjoy the advantages of the present invention, the user must position the virtual reality glasses so that he can see the environment through the virtual reality images displayed to him by means of said device. In other words, the user does not view the environment directly, but sees everything through, in this case, the virtual reality glasses.

The virtual reality device, in particular the virtual reality glasses, comprises one or more cameras that capture and record the user's viewpoint. The method and system of the present invention display to the user the image from these cameras, except that, before showing the content captured and/or recorded by the camera or cameras, the system processes the image to provide a number of functionalities and services.

As regards this objective, the system divides the images captured into three parts or layers, so that it can process the correct part or layer:
- the pixels of the image that correspond to the vehicle interior or passenger compartment, "passenger compartment" meaning the interior trim, the dashboard, the seats, the rear-view mirrors, and the other components that make up and define the interior of the passenger compartment of a vehicle,
- the pixels of the image that correspond to the area outside the passenger compartment, the area outside the vehicle passenger compartment including any element that is outside the side windows, windscreen and/or rear window of the vehicle, and
- the pixels of the image that correspond to additional objects such as parcels, passengers or the user himself.

In a preferred embodiment of the invention, and so that the system can provide the maximum functionalities, the virtual reality device comprises the plans or layout of the interior of the vehicle. It also comprises a system for exact positioning and orientation of the virtual reality device in space.

To be specific, the invention consists in a method for displaying virtual reality information in a vehicle, in which a virtual reality device is used by a user inside the vehicle, in which the method comprises the steps of:
i) capturing at least one image of an environment of the user, in which the at least one image captured coincides with a field of vision of the user, in which the at least one image comprises at least one segment,
ii) classifying the at least one segment of the at least one image as pertaining to
   a) interior of the vehicle
   b) outside the vehicle, and
   c) additional object of the vehicle,
iii) modifying the at least one segment based on the classification of the at least one segment,
iv) generating a virtual environment of the user, in which the virtual environment comprises at least one virtual segment, in which the at least one virtual segment generated is based on the modified segment, and
v) displaying the virtual environment generated by means of the virtual reality device.

Thus, the method of the invention succeeds in separating out the information captured through the camera or cameras so as to display said information by means of the virtual reality device, altering only some of the information.

This is achieved by changing the design of the image digitally, which involves a cost saving as opposed to if the same aesthetic change were achieved by real, non-virtual means. It also increases the possibilities for personalization of the environment viewed by the user, and of the appearance of both the interior of the passenger compartment and the outside displayed to the user. Thanks to the separation into layers, when it is desired to modify only the visual appearance of, for example, the interior of the vehicle, neither additional objects located inside the vehicle (such as passengers or an arm of the driver himself) nor the area outside the vehicle are modified mistakenly or incorrectly.

In particular, the method of the invention offers advantages such as:
- modifying the luminosity of the images of the area outside the vehicle, offering greater visibility of the outside and, consequently, safer driving;
- displaying augmented reality in the images of the area outside the vehicle;
- removing areas of the interior of the passenger compartment, such as an upright or a door, so as to get rid of areas with poor visibility and blind spots, replacing said images with the images captured, for example by external cameras, thereby increasing the driver's visibility;
- changing the design of interior areas of the vehicle at no cost;
- keeping in the foreground intermediate objects between the user and the passenger compartment, such as other occupants of the vehicle, objects of the user himself, decorative objects of the user, etc.

Additionally, and because the image captured is divided into the abovementioned three parts or layers, it is possible to offer the functionality of accurately displaying the part corresponding to the passenger compartment with different designs, without this display overlapping passengers or objects.

"Segment" means a portion or a part of an image. The subdivision of an image into portions or segments may be performed by image processing, dividing the image according to colour, volume, geometry, outline, etc., thereby obtaining the plurality of segments that make up the image. Alternatively, the image may be subdivided by pixels or the like. Thus, the term "segment" of an image is equivalent to a pixel of said image, and they are interchangeable, both meaning the same thing.

Furthermore, "virtual environment" means the space surrounding the user of a virtual reality system, generated on the basis of captured images of the real environment, in which said captured images may be processed beforehand. Thus, just as a captured image of the environment comprises at least one segment, the virtual environment comprises at least one virtual segment, "virtual segment" meaning the subdivision, portion or part of the virtual environment.

The capture of at least one image that coincides with a field of vision of the user means that said image is what is seen by said user when not wearing a virtual reality device in front of his eyes, and/or with no other obstacle obstructing his view of the reality in front of him.

Note that, according to the method described, the step of modifying the at least one segment based on the classification of the at least one segment comprises modifying one, two or all of said layers, so that the virtual environment generated comprises some modification with respect to the real environment.

According to another aspect of the invention, the step of classifying the at least one segment is based on a location of at least one element of the environment of the user with respect to the virtual reality device, in which the method further comprises the steps of:
a) obtaining at least one real vector, in which the at least one real vector comprises a modulus and a direction between the virtual reality device and the at least one element of the environment of the user,
b) determining a position of the virtual reality device in the vehicle,
c) assigning the at least one real vector to the at least one segment, and
d) comparing the at least one real vector with at least one theoretical vector, in which the at least one theoretical vector is already known.

It is thus possible to classify and label the at least one segment of the at least one image as pertaining to the interior of the vehicle, outside the vehicle or an additional object of the vehicle, based on the comparison of the at least one real vector with the at least one theoretical vector.

It must be specified that the at least one theoretical vector is based on a layout of the vehicle passenger compartment and on the position of the virtual reality device in the vehicle, in which the layout of the vehicle passenger compartment is already known. It is thus possible to determine the physical orientation of the virtual reality device in the vehicle.

Note that the layout of the vehicle passenger compartment is like a 3D (three-dimensional) map of the interior, such that knowing the position of the virtual reality device, all the theoretical vectors between the virtual reality device and the at least one element of the environment are known. "Element of the environment" means any body or object that is located around the user. Thus, an element of the environment may be, for example, a windscreen of the vehicle, a seat of the vehicle, etc. The distance and direction between a segment or pixel of the captured image and the concrete point of reference are thus known. For example, the fixed point of reference or origin of the real vector may be the lens of the at least one camera, in which the camera captures the at least one image of the user's environment.

Moreover, the method comprises an additional step of determining at least one window zone in the at least one captured image, in which the step of determining the at least one window zone comprises recognizing at least one predefined geometric shape by means of image processing and/or determining at least one marker on the at least one image, in which the marker comprises a predefined colour, and/or comparing the at least one real vector with the at least one theoretical vector. Thus, the method makes it possible to discern the window zone in the captured image of the user's environment. The images of said zone may therefore be attributed to images from outside the vehicle. "Window zone" means the glazed space of the vehicle, which protects the user from inclement weather while enabling him to see the surrounding environment. Both the windscreen and rear window and the side windows constitute the window zone of the vehicle.

As stated above, a map or layout of the interior of the vehicle is already known. If, as a result of the comparison of the real vector obtained with a theoretical vector which is known and deemed to be the window zone, i.e. both angles and moduli coincide, it may be concluded that it is the window zone.

In a preferred embodiment, there may be means for facilitating the position of the glazed panes or window zone, such as window frames painted in a predetermined colour and determined by means of a step of processing the at least one captured image of the user's environment.

Therefore, and advantageously, the at least one segment is classified as pertaining to outside the vehicle if the at least one segment is arranged in the at least one window zone in the at least one image. Therefore, and as stated above, it is possible to establish a correspondence between the at least one segment of the image and the window zone of the vehicle passenger compartment.

According to another aspect of the invention, the at least one segment is classified as pertaining to the interior of the vehicle if the real vector of the at least one segment is substantially equal to the theoretical vector, in that both the angle and the moduli of the vectors coincide. It is stressed that, in this case, the theoretical vector is not defined as the window zone. Thus, the method makes it possible to discern at least one segment of the image belonging to the interior of the vehicle passenger compartment.

According to yet another aspect of the invention, the at least one segment is classified as pertaining to an additional object of the vehicle if the modulus of the real vector of the at least one segment is less than the modulus of the theoretical vector. It is stressed that, both if the theoretical vector is defined as the window zone and if it is not defined as the window zone, if the modulus of the real vector is less than the modulus of the theoretical vector it means that at least one segment of the image pertains to an additional object present in the vehicle passenger compartment.

Note also that the step of determining a position of the virtual reality device in the vehicle comprises determining a location of the user's head by means of image processing and/or determining a location of at least one point of reference of the virtual reality device by means of image processing and/or determining a location of the virtual reality device by means of triangulation and/or determining a location of the virtual reality device by means of at least one inertial system provided in the virtual reality device.

Moreover, the step of displaying the virtual environment comprises displaying a virtual field of vision substantially equal to the user's field of vision, in which the virtual field of vision comprises the at least one virtual segment corresponding to the segment pertaining to the interior of the vehicle and/or the area outside the vehicle and/or the at least one additional object of the vehicle. Optionally, the virtual field of vision displayed may also be greater than the user's field of vision, so that the user's' field of vision may be increased, improving driving safety.

In a preferred embodiment of the invention, the step of generating a virtual environment comprises superposing the at least one virtual segment corresponding to the at least one vehicle additional object segment on the at least one vehicle interior segment, and comprises superposing the at least one virtual segment corresponding to the at least one vehicle additional object segment on the at least one vehicle outside segment.

Thus, the method allows the virtual display of not only the interior part of the passenger compartment of the vehicle, or only the outside part of the vehicle, as captured by the at least one camera, but also the virtual display of at least one additional object, either because it is captured by at least one internal camera of the passenger compartment and/or of the virtual reality device, or because it is determined that it should be displayed for the purpose of some functionality, or in order to improve the user's experience in the vehicle.

Thus, the content of this additional object layer is not lost or removed, but is displayed as appropriate, superposed on the rest of the layers pertaining to the interior and area outside the vehicle. Therefore, the at least one segment of the at least one image classified as pertaining to an additional object of the vehicle will be duly displayed in the virtual environment, prioritizing display thereof in the virtual environment. It is important that, in generating the virtual environment, the segments classified as pertaining to an additional object of the vehicle are not removed, since this could create untoward situations, such as failure to display, in the virtual environment generated, the driver's arm while it is operating an actuator of the vehicle, failure to display a passenger to whom the driver is talking, failure to display money when the user is paying a toll, etc.

According to another aspect of the invention, modifying the at least one vehicle additional object segment comprises changing a colour, a texture and/or a shape of the at least one segment, such that a design of the additional object is changed in the virtual environment displayed by the virtual reality device. Thus, the virtual environment displayed by the virtual reality device may display the information in an enhanced manner, or with additional functionalities. The additional object may be transparent in the virtual environment generated, so as to enhance or highlight a segment classified as pertaining to the vehicle interior or area outside the vehicle, but it is not removed in the virtual environment.

Advantageously, the step of generating a virtual environment of the user comprises adding at least one additional object in the virtual environment, in which the at least one additional object replaces the at least one vehicle interior segment and/or the at least one vehicle outside segment. This creates an intermediate virtual object between the image corresponding to the vehicle interior or passenger compartment, or the area outside the vehicle, and the user, while still superposing said layer on the layers corresponding to the parts of the image pertaining to the interior and the outside.

This affords additional advantages, such as the ability to display, for example, virtual passengers seated and oriented correctly, to accompany the user; display, for example, a virtual navigator who, as well as giving directions, talks about other subjects, or reads the daily news; virtually display, for example, the contact with whom you are having a telephone conversation or who has sent a message; or display, for example, an animated character to entertain younger occupants sitting in the rear seats of the vehicle. Another possible advantage is that of modifying the appearance of real passengers, using virtual displays, for entertainment purposes.

Moreover, the step of modifying the at least one vehicle interior segment comprises changing a colour, a texture and/or a shape of the at least one segment, so that a design of a passenger compartment of the vehicle is changed in the virtual environment displayed by the virtual reality device. Thus, the method makes it possible, in addition to changing the appearance of the virtual environment, to include additional virtual elements, such as a screen that does not really exist in the passenger compartment, or another type of virtual actuator. Furthermore, modifying the at least one vehicle interior segment makes it possible to change the complete design of the vehicle passenger compartment inexpensively and effectively, at no cost to the user. If the user prefers a sportier interior or a more high-tech interior, he simply has to load this desired interior. The virtual environment generated will incorporate the vehicle interior desired by the user, replacing the segments of the at least one image classified as pertaining to the interior of the vehicle.

According to another aspect of the invention, the method comprises an additional step of capturing at least one external image of an environment of the vehicle, in which modifying the at least one vehicle interior segment comprises replacing the at least one interior segment of the at least one image with at least one section of the external image of the environment of the vehicle, in which the at least one section of the external image coincides with the field of vision of the user taken up by the at least one replaced segment. Thus, by virtue of the method, at least one interior zone of the vehicle may be made transparent, thus displaying the zone outside the vehicle. Said external image may be captured by an external wide-angle camera. Moreover, the degree of transparency may be changed, with an interior segment being partially or totally transparent depending on the risk of accident, particular driving conditions, etc.

Advantageously, modifying the at least one vehicle outside segment comprises changing a colour, brightness, luminosity, contrast and/or saturation of the at least one segment, so that a view of the area outside the vehicle is changed in the virtual environment displayed by the virtual reality device. The method thus makes it possible to modify the conditions of luminosity and visibility, potentially improving real conditions.

Moreover, the method comprises an additional step of capturing at least one second image by means of at least one second camera, in which the at least one second camera comprises night vision and/or a wide-angle lens, and in which modifying the at least one vehicle outside segment comprises replacing the at least one segment of the at least one image with at least one section of the second image captured by the at least one second camera, in which the at least one section of the second image captured coincides with the field of vision of the user taken up by the at least one replaced segment. Thus, the method makes it possible to integrate in the virtual environment displayed by the virtual reality device at least one image, such as a night-vision image, or an image from a thermal-imaging, infrared or intensified camera, thereby increasing the performance of the image of the virtual environment displayed, improving the user's view of the environment in which he is travelling.

Said advantages of modifying the appearance of the outside, improving visibility conditions, may take concrete form in one of the following possibilities:
- increasing the luminosity of a dark environment and, alternatively, reducing the luminosity of an environment with too much light, preventing dazzling;
- displaying a night-vision, infrared or thermal image, an overlap of several of the above, or one of the above overlapped with the real image;
- modifying the outside weather conditions, visually in the virtual environment generated. For example, the user may define a virtual environment which is sunny rather than cloudy, which has advantages in terms of visibility and well-being;
- improving the user's vision using wide-angle cameras or cameras with zooms or amplification of the image, which is particularly advantageous for persons with vision problems.

Note that the step of generating a virtual environment of the user comprises incorporating at least one item of additional virtual information, so that the user has access to information through images in the most visual way possible, allowing immediate understanding. Thus, it is possible to display in the virtual environment information relating to the vehicle, such as driving variables, GPS navigation data, various information in the windscreen zone so that the user may see said information without taking his eyes off the road. It is also possible to display augmented reality information, indicating the position of points of interest along the route taken by the vehicle, or other additional information.

The present invention also relates to a system for displaying virtual reality information in a vehicle, in which the system comprises:
- a virtual reality device, in which the virtual reality device comprises at least one screen,
- at least one first camera, in which the at least one first camera is configured to capture at least one image, in which the at least one image coincides with a field of vision of the user, and
- at least one processing unit, in which the at least one processing unit is configured to classify the at least one segment of the at least one image of the interior of the vehicle, area outside the vehicle and additional object of the vehicle, and in which the at least one processing unit is configured to modify the at least one segment of the at least one image based on the classification of the at least one segment, and in which the at least one processing unit is configured to generate a virtual environment of the user, in which the virtual environment comprises the at least one virtual segment, in which the at least one virtual segment generated is based on the modified segment.

Thus, the system is capable of classifying the parts or segments of the at least one image received. In detail, the at least one first camera is located at the viewpoint of the user so that it may modify this information to offer functionalities, also affording the advantages relating to the method described.

The virtual reality device may be worn on the head of a user of the vehicle, thus helping the virtual reality device to capture, via the at least one first camera, the field of vision of the user.

Advantageously, the system comprises at least one position detection means, in which the position detection means is configured to determine a position of the virtual reality device in the vehicle.

In a preferred embodiment of the invention, the system comprises at least one distance sensor, in which the at least one distance sensor is configured to obtain at least one real vector, in which the at least one real vector comprises a modulus and a direction between the virtual reality device and the at least one element of the environment of the user. It is thus possible to determine the distance between the virtual reality device and the physical environment of the vehicle. Thus, a LIDAR (Laser Imaging Detection and Ranging) sensor may be arranged adjacent to the at least one first camera, so that the at least one segment of the image is paired with a real vector.

According to another aspect of the invention, the system comprises at least one memory unit, in which the at least one memory unit comprises a layout of the interior of the vehicle, so that at least one theoretical vector is calculated on the basis of a layout of the passenger compartment of the vehicle, preferably 3D and already known, and the position of the virtual reality device in the vehicle.

It is specified, therefore, that the layout of the interior of the vehicle is already known in a preferred embodiment. This means knowing the plan or map of the interior of the vehicle and therefore the theoretical distances from each object in the environment as a function of the position occupied by the virtual reality device in the vehicle interior.

According to another aspect of the invention, the system comprises at least one detector element, in which the at least one detector element is configured to detect the position of the additional objects. In order to determine more accurately the distances between the virtual reality device and the environment, it is possible to put in place at least one additional detector so as to detect the exact position of the movable objects in the passenger compartment, such as the steering wheel, glove box, gear stick, sun visor, etc. The information obtained by the distance sensor thus coincides with the theoretical vector. If not, a segment that actually forms part of the interior of the vehicle would be classified as an additional object of the vehicle. Thus, the virtual image displayed in the virtual reality device coincides with the real image and the user may interact with the vehicle accordingly. Alternatively, the position of the at least one movable element may be detected by image recognition means.

Additionally, the system comprises at least one second camera, in which the at least one second camera comprises night vision and/or a wide-angle lens. Said at least one second camera may be oriented towards the area outside the vehicle, or may coincide with the user's field of vision.

The system may also comprise at least one third camera oriented towards the area outside the vehicle, in which the at least one third camera is configured to capture at least one image outside the vehicle. Said third camera may be intended specifically to capture images outside the vehicle, and the information captured by the third camera may be displayed in the virtual reality device.

The attached drawings show, by way of non-limiting example, a method and system for displaying virtual reality information in a vehicle, according to the invention. Other features and advantages of said method and system for displaying virtual reality information in a vehicle, according to the present invention, will become clear from the description of a preferred, but not exclusive, embodiment which is shown by way of non-limiting example in the attached drawings, in which:

### BRIEF DESCRIPTION OF THE DRAWINGS

Figure 1 is a perspective view of the passenger compartment of a vehicle, according to the present invention.
Figure 2 is a first-person view of the field of vision of a user from the driver's position in the passenger compartment of a vehicle, according to the present invention.
Figure 3 is a perspective view of a virtual reality device, according to the present invention.
Figure 4A is a perspective view of a virtual reality device in a first position, according to the present invention.
Figure 4B is a perspective view of a virtual reality device in a second position, according to the present invention.
Figure 5A is a perspective view of the first row of seats in the passenger compartment of a vehicle, with two users wearing their respective virtual reality devices, according to the present invention.
Figure 5B is a perspective view of the field of vision of the driver in the passenger compartment of a vehicle, according to the present invention.
Figure 6A is a perspective view of the virtual environment seen by the driver in the passenger compartment of a vehicle through the virtual reality device, with a first design of the dashboard, according to the present invention.
Figure 6B is a perspective view of the virtual environment seen by the driver in the passenger compartment of a vehicle through the virtual reality device, with a second design of the dashboard, according to the present invention.
Figure 7A is a perspective view of the virtual environment, with a night-vision view of the outside, seen by the driver in the passenger compartment of a vehicle through the virtual reality device, according to the present invention.
Figure 7B is a perspective view of the virtual environment, with a side view of the outside, the side door of the vehicle having been made transparent, seen by the driver in the passenger compartment of a vehicle through the virtual reality device, according to the present invention.
Figure 7C is a perspective view of the virtual environment, with a view of a virtual character, seen by the passenger in a vehicle through the virtual reality device, according to the present invention.
Figure 8 is a block diagram of the elements making up the system of the present invention.

### DESCRIPTION OF A PREFERRED EMBODIMENT

With reference to the above figures, and following the numbering used, said figures show a preferred embodiment of the invention, which comprises the parts and elements mentioned and described in detail below.

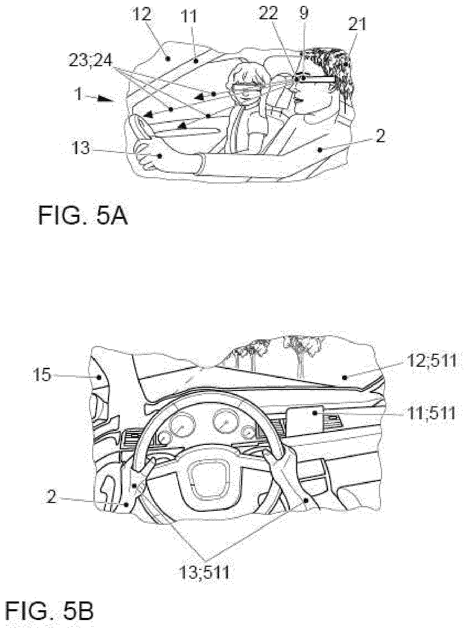

As can be seen in Figure 5A, the system and method of the present invention is based on the display of virtual reality information by means of a virtual reality device 3. The virtual reality device 3 is preferably arranged on the head 21 of the user 2, both a driver and a passenger, when they are inside a vehicle 1.

To sum up, the method of the present invention performs the following actions, in a preferred embodiment:
- captures at least one image 5 by means of at least one first camera 31 that coincides with the field of vision 22 of the user;
- measures at least one distance separating the user 2 from each pixel, segment or zone of the image 5 captured, so as to obtain real distances between the user 2 and the environment;
- positions the virtual reality device 3 or virtual reality glasses inside the vehicle 1;
- compares a real distance obtained through the above measurements with a theoretical distance according to the known 3D or three-dimensional layout of the vehicle 1;
- classifies the pixels of the image 5 captured into different layers, whether they pertain to 1) the outside 12, i.e. beyond the glazed panes of the passenger compartment of the vehicle 1, 2) the actual passenger compartment or interior 11, in which the real distance coincides with the theoretical distance according to the 3D layout, or 3) an object not belonging to the passenger compartment or additional object 13, which is however located inside the passenger compartment, in which the real distance is less than the theoretical distance according to the 3D layout;
- modifies the image 5 captured, so that new information is displayed, in at least one of the layers classified above, by modifying the pixels corresponding to the layer pertaining to the outside 12 of the passenger compartment, the interior 11 of the passenger compartment and/or an additional object 13 present in the passenger compartment of the vehicle 1.

As regards the system of the invention, in brief, it comprises the following elements in a preferred embodiment:
- virtual reality device 3 for displaying an item of virtual reality information to the user 2;
- camera 31 for capturing the environment and the direction of viewing of the user 2;
- system for positioning the virtual reality device 3 in the environment.

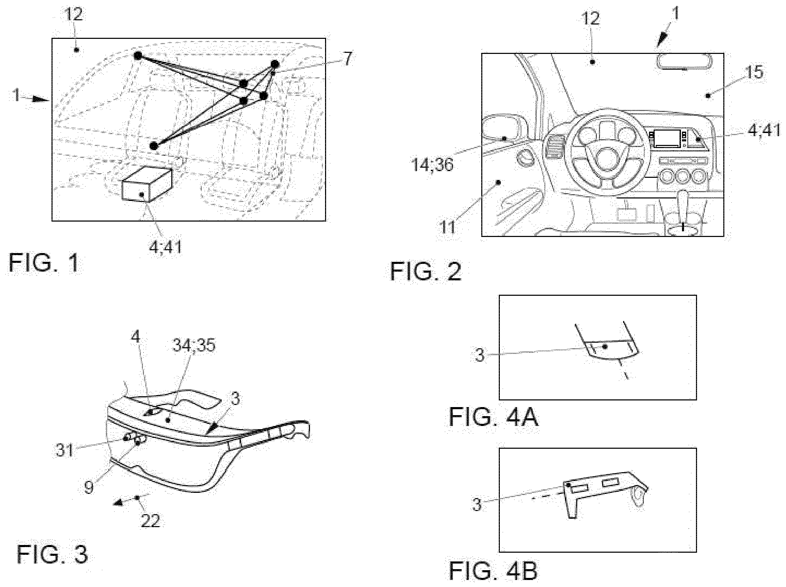

Figure 1 shows, by way of illustration, the passenger compartment of a vehicle 1, with a processing unit 4 and a memory unit 41, located preferably under the dashboard. It also shows a plurality of position detection means 7 for detecting the position of the virtual reality device 3 in the vehicle 1. One example for positioning the virtual reality device 3 is by means of transceivers, for example infrared or electromagnetic wave transceivers. Thus, by means of a process of triangulation and knowing the transmission and response time for said waves with devices located in known locations in the vehicle, it is possible to determine its position precisely.

Figure 2 shows, by way of illustration, a front view of the position of the driver in the passenger compartment of a vehicle 1, according to the present invention. It thus shows the position of the processing unit 4, and the memory unit 41. It also shows the various zones: interior 11, outside 12 and window zone 15 into which is divided the field of vision of a user 2 positioned in the driver's seat. This may be an item of virtual reality information displayed to the driver of the vehicle, in which the segments 52 of the image 5 classified as additional objects 13 of the vehicle 1, such as the driver's own body, have been removed. It is thus possible to see the problem that may result from removing said layer or segments 52, since the user cannot see where his hands are for the purpose of interacting with the vehicle 1.

Figure 3 shows, by way of illustration, a perspective view of a virtual reality device 3 according to the present invention. Said virtual reality device 3 is, preferably, virtual reality glasses. The virtual reality glasses preferably comprise a first camera 31 for capturing the at least one image 5, at least one distance sensor 9, in which the at least one distance sensor 9 is configured to obtain at least one distance between the user 2 and the objects in the environment, an accelerometer 34 and a gyroscope 35 in order to determine a position of the virtual reality device 3 in the vehicle 1, and a processing unit 4. Thus, the virtual reality device 3 knows where it is positioned, and knows the distance to each point in the passenger compartment of the vehicle 1.

Moreover, the virtual reality device 3, or virtual reality glasses, comprises one of the following elements: high-resolution camera, high quality auto-focus systems, night-vision and/or infrared camera, systems capable of determining the distance to all the objects in the image 5 (e.g. a LIDAR).

The system of the invention has a processing unit 4 that may be located both in the vehicle 1 and in the virtual reality device 3. In a preferred embodiment, the processing unit 4 is integrated in the virtual reality device 3, preferably in the virtual reality glasses, so that the user 2 may get out of the vehicle 1 and his glasses will be smart, in that they continue working outside 12 the vehicle 1 with functionalities similar to those it had in the interior 11 of the vehicle 1. In the embodiment of the invention in which the processing unit 4 is inside the vehicle, as shown in Figure 1, the latter sends to the virtual reality device 3 only the information that it has to display. In this case, it is the processing unit 4 of the vehicle that will perform the processing work. In this case, the means for transmission between the processing unit 4 of the vehicle 1 and the virtual reality device 3 are highly efficient and fast so that the user 2 does not notice any delay between what he is seeing and the reality.

Figure 4A shows, by way of illustration, a virtual reality device 3 in a first position, corresponding to a top view of the virtual reality glasses. Figure 4B shows, by way of illustration, a virtual reality device 3 in a second position, corresponding to a side view of the virtual reality glasses. In order to position the virtual reality device 3 in the environment, it is possible to create in the glasses markers or beacons which serve as points of reference. In Figure 4A, the markers are arranged in the top area of the glasses frame.

In Figure 4B, the markers are arranged in the side area of the arms. By means of cameras arranged inside the vehicle, the position and orientation of said markers are determined, thereby positioning the virtual reality device 3.

More particularly, as can be seen in Figures 2, 5A, 5B, 6A, 6B, 7A, 7B, 7C, the method for displaying virtual reality information in a vehicle 1 comprises the following steps:
i) capturing at least one image 5 of an environment of the user 2, in which the at least one image 5 captured coincides with a field of vision 22 of the user 2, in which the at least one image 5 comprises at least one segment 52,
ii) classifying the at least one segment 52 of the at least one image 5 as pertaining to the interior 11 of the vehicle 1, the area outside 12 the vehicle 1, and an additional object 13 of the vehicle 1,
iii) modifying the at least one segment 52 based on the classification of the at least one segment 52,
iv) generating a virtual environment of the user 2, in which the virtual environment comprises at least one virtual segment 6, in which the at least one virtual segment 6 generated is based on the modified segment 52, and
v) displaying the virtual environment generated by means of the virtual reality device 3.

According to another aspect of the invention, the step of classifying the at least one segment 52 is based on a location of at least one element of the environment of the user 2 with respect to the virtual reality device 3, in which the method further comprises the steps of:
a) obtaining at least one real vector 23, in which the at least one real vector 23 comprises a modulus and a direction between the virtual reality device 3 and the at least one element of the environment of the user,
b) determining a position of the virtual reality device 3 in the vehicle 1,
c) assigning the at least one real vector 23 to the at least one segment 52, and
d) comparing the at least one real vector 23 with at least one theoretical vector 24, in which the at least one theoretical vector 24 is already known.

Figure 5A shows, by way of illustration, a vehicle 1 with two users 2 wearing their respective virtual reality devices 3. Both are wearing virtual reality glasses on their heads 21. It schematically shows how the virtual reality device captures images 5 of the environment, coinciding with the field of vision 22 of the user 2.

Furthermore, at least one distance sensor 9 captures at least one modulus and one direction between the virtual reality device 3 and the elements located in the environment of the user 2, so as to define a plurality of real vectors 23. Each segment 52 of the image 5 is associated with at least one real vector 23, so as to ascertain a relative position of the at least one segment 52 with the user 2.

Moreover, at least one position detection means 7 is used to ascertain the position of the virtual reality device 3 inside the vehicle 1. It is essential to ascertain the position to locate the user 2 in a three-dimensional map of the vehicle 1 which is already known. Thus, a plurality of theoretical vectors 24 will be ascertained, which indicate the relative position between the objects located in the environment of the user 2 and the actual user 2. A comparison between the plurality of theoretical vectors 24 and the plurality of real vectors 23 will make it possible to classify the plurality of segments 52 or additional objects of the image 5, thereby generating a virtual environment tailored to the exact needs of the user 2.

In order to determine the segments 52 of the image that display the area outside 12 the vehicle 1, at least one window zone 15 is determined in the at least one image 5 captured. It is based on recognizing at least one predefined geometric shape by means of image processing and/or determining at least one marker of the at least one image 5, in which the marker comprises a predefined colour, and/or comparing the at least one real vector 23 with the at least one theoretical vector 24. To be specific, the window zone 15 corresponds to the windscreen, or any glazed or transparent surface of the vehicle 1. Thus, at least one segment 52 is classified as pertaining to the area outside 12 the vehicle 1 if the at least one segment 52 is arranged in the at least one window zone 15 in the at least one image 5.

Figure 5B shows a first virtual environment of the user 2 which is generated. It can be seen that this first virtual environment does not have any modification with respect to the real environment of the user 2. Thus, it shows a field of vision of a driver user 2 in the passenger compartment of a vehicle 1, in which the various zones of the field of vision 22 can be seen, classified as pixels or segments 52 that correspond to the interior 11 of the vehicle 1, or passenger compartment, pixels that correspond to additional objects 13 not belonging to the interior 11 of the vehicle 1, or passenger compartment, in this case the hands of the driver user 2, and pixels that correspond to the area outside 12 the vehicle 1, i.e. the part of the image 5 that is over the window.

Note that the present invention classifies the pixels of the image 5 into at least the following layers: outside 12, interior 11, and additional object 13. The layer pertaining to the outside 12 corresponds to the captured pixels that are positioned in the glazed or window zone 15. Therefore, everything that is captured and, according to the 3D layout, is indicated as glazed or window zone 15, corresponds to the outside 12, as long as the distance from this pixel is equal to the real distance. As regards the interior 11 of the vehicle 1, or passenger compartment, the real distance must coincide with the theoretical distance according to the 3D layout. As regards the additional object 13, not belonging to the interior 11 of the vehicle 1, or passenger compartment, the real distance must be less than the theoretical distance according to the 3D layout.

To be specific, an image 5 captured by the first camera 31 comprises a plurality of segments 52. "Segments" means any subdivision of the image 5, whether by volume, colour, shape or even pixels, the image 5 preferably being subdivided by pixels. Each segment 52 or pixel is associated with a real vector 23. By comparing the real vector 23 with the theoretical vector 24, the segment 52 can be classified into the layers explained above. Depending on the user's needs, a virtual environment will be generated, to be displayed by the virtual reality device 3, in which this virtual environment will comprise a plurality of virtual segments 6. Note the equivalence between the segment 52 and the virtual segment 6, in which the virtual segment 6 will be equivalent to the pixel of the image 5, possibly modified as a function of the virtual environment generated and the needs of the user 2. In subsequent figures, examples of virtual reality information displayed to a user 2 in a vehicle 1 will be shown, to enhance and illustrate some of the advantages of the present invention.

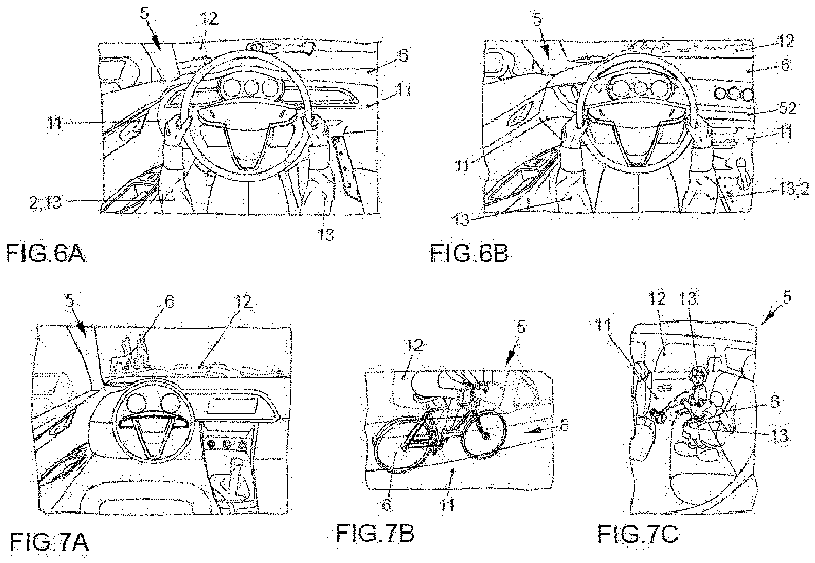

Figure 6A shows, by way of illustration, a first design of the dashboard seen by the driver in the passenger compartment of a vehicle 1 through the virtual reality device 3. Said first design shows a first aesthetic solution for the steering wheel, milometer, speedometer and the various indicators present on the dashboard.

Figure 6B shows, by way of illustration, a second design of the dashboard seen by the driver in the passenger compartment of a vehicle 1 through the virtual reality device 3. Said second design shows a second aesthetic solution for the steering wheel, milometer, speedometer and the various indicators present on the dashboard, the second design being different to the first design. Thus, without the need to alter the physical components of the interior of the vehicle 1, the user 2 can see an interior 11 of the vehicle 1 with totally different designs and appearances, by modifying a colour, a texture and/or shape of the pixels or segments 52 classified as pertaining to the interior 11 of the vehicle 1. It will be understood that the architecture cannot be modified since, otherwise, the comparison between the real vector 23 and the theoretical vector 24 would not work. The present invention makes it possible to generate, within the same architecture, different designs, create new displays or screens on the current architecture, etc.

Note that in both Figures 6A and 6B, the virtual environment displayed includes the hands of the driver user 2, through various virtual segments 6. The segments 52 classified as pertaining to an additional object 13 of the vehicle 1, such as in this case the hands of the user 2, are superposed on the virtual segment 6 corresponding to a segment classified as pertaining to the interior 11 of the vehicle 1 or as pertaining to the area outside 12 the vehicle 1. Otherwise, the user 2 could not interact with the interior 11 of the vehicle, as he would not know where to position his hands, which actuator to operate, etc., posing a safety risk during driving.

Figure 7A shows, by way of illustration, a night-vision view of the outside 12 seen by the driver in the passenger compartment of a vehicle 1 through the virtual reality device 3. The virtual environment displayed includes a couple of pedestrians and a dog, whose silhouettes stand out more brightly against the dark background, through various virtual segments 6. Thus, the brightness, colour, luminosity, contrast and/or saturation of at least one pixel or segment 52 has been modified. The virtual segment 6 generated will ensure greater visibility of the area outside 12 the vehicle 1 than if the user was seeing the original segment 52.

Figure 7B shows, by way of illustration, a view of the field of vision 22 of a driver of the vehicle 1 when he is looking to the left, i.e. looking towards the side door of the vehicle 1. In this case, a second camera 36, oriented towards the area outside 12 the vehicle 1, captures an external image 8. In this specific case, the external image 8 captures a cyclist who is next to the vehicle 1. Thus, at least one segment 52 of the at least one image 5 that is classified as pertaining to the interior 11 of the vehicle 1, in this specific case the pixels corresponding to a trim on the door of the vehicle 1, is replaced by at least one section of the external image 8 captured by the at least one second camera 36, enabling the user 2 to see the cyclist.

Thus, information is captured by other cameras 14, 36, in particular night-vision or external cameras, or a camera oriented so that it can capture something behind the user 2, in his blind spot. Moreover, the at least one segment 52 of the image 5 classified as pertaining to the interior 11 of the vehicle 1 is modified, creating at least one virtual segment 6 that applies a degree of transparency with respect to the at least one original segment 52. This makes it possible to make the area of the post, or upright A, or side of the front windscreen, transparent and display instead the information captured by the other cameras 14, 36, in particular an external camera.

Figure 7C shows, by way of illustration, a perspective view of the virtual environment, with a view of a virtual character seen by the rear passenger in a vehicle 1 through the virtual reality device 3, according to the present invention. Thus, the virtual environment displayed comprises texture at least one additional object 13, in this case the animated character, to the virtual environment generated. Moreover, it can be seen that another passenger in the vehicle is also classified as an additional object 13 of the vehicle. Both additional objects 13 of the vehicle 1 are superposed on the at least one segment 52 classified as pertaining to the area outside 12 the vehicle, and on the at least one segment 52 classified as pertaining to the interior 11 of the vehicle. Moreover, a colour, a texture and/or a shape of the at least one segment 52 classified as pertaining to an additional object 13 of the vehicle 1 may be altered, so that the virtual segment 6 displayed in the virtual environment comprises a design or appearance that is different to the original segment 52.

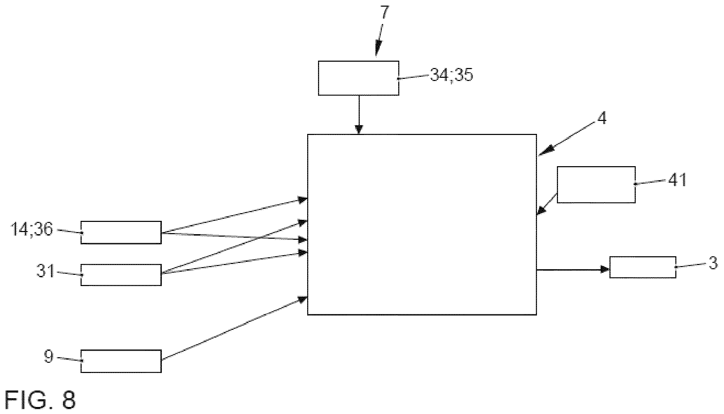

Figure 8 shows, by way of illustration, a block diagram of the elements that make up the system of the present invention, in which can be seen the various interconnections between the virtual reality device 3, the accelerometer 34, the gyroscope 35, the first camera 31, the second camera 14, the third camera 36, the processing unit 4, the memory unit 41, the position detection means 7 and the distance sensor 9.

Thus, the present invention also relates, as can be seen in Figures 2, 5A, 5B, 6A, 6B, 7A, 7B, 7C and 8, to a system for displaying virtual reality information in a vehicle 1, in which the system comprises a virtual reality device 3, in which the virtual reality device 3 comprises at least one screen, at least one first camera 31, in which the at least one first camera 31 is configured to capture at least one image 5, in which the at least one image 5 coincides with a field of vision 22 of the user 2, and at least one processing unit 4, in which the at least one processing unit 4 is configured to classify the at least one segment 52 of the at least one image 5 as pertaining to the interior 11 of the vehicle 1, the area outside 12 the vehicle 1 and an additional object 13 of the vehicle 1, and in which the at least one processing unit 4 is configured to modify the at least one segment 52 of the at least one image 5 based on the classification of the at least one segment 52, and in which the at least one processing unit 4 is configured to generate a virtual environment of the user 2, in which the virtual environment comprises the at least one virtual segment 6, in which the at least one virtual segment 6 generated is based on the modified segment 52.

Note that the virtual reality device 3 is, preferably, virtual reality glasses. The first camera 31 is, preferably, a high-resolution camera and it may comprise auto-focus means.

The system of the invention also comprises at least one position detection means 7, in which the position detection means 7 is configured to determine a position of the virtual reality device 3 in the vehicle 1. Furthermore, the system comprises at least one distance sensor 9, in which the at least one distance sensor 9 is configured to obtain at least one real vector 23, in which the at least one real vector 23 comprises a modulus and a direction between the virtual reality device 3 and the at least one element of the environment of the user 2. One example of a distance sensor 9 would be a LIDAR, i.e. a device for determining the distance from a laser emitter to an object or surface using a pulsed laser beam.

The system also comprises at least one memory unit 41, in which the at least one memory unit 41 comprises a layout of the interior 11 of the vehicle 1, so that at least one theoretical vector 24 is calculated on the basis of a layout of the passenger compartment of the vehicle 1 and the position of the virtual reality device 3 in the vehicle 1.

The details, shapes, dimensions and other accessory aspects, and the components used in the implementation of the method and system for displaying virtual reality information in a vehicle, may be substituted as appropriate by others which are technically equivalent, without departing from the essence of the invention or the scope defined by the claims included after the following list.

### List of reference signs:

- 1: vehicle
- 11: interior
- 12: outside
- 13: additional object
- 14: second camera
- 15: window zone
- 2: user
- 21: head
- 22: viewpoint
- 23: real vector
- 24: theoretical vector
- 3: virtual reality device
- 31: first camera
- 32: sensor
- 34: accelerometer
- 35: gyroscope
- 36: third camera
- 4: processing unit
- 41: memory unit
- 5: image
- 52: segment
- 6: virtual segment
- 7: position detection means
- 8: external image
- 9: distance sensor

## Claims

1. Method for displaying virtual reality information in a vehicle (1), in which a virtual reality device (3) is used by a user (2) inside the vehicle (1) to see an user's environment through the virtual reality images displayed to the user by means of the virtual reality device (3), **characterised in that** the method comprises the following steps:
i) capturing at least one image (5) of the environment of the user (2), in which the at least one image (5) captured by means of at least one first camera (31) coincides with a field of vision (22) of the user (2), in which the at least one image (5) captured is divided into at least three segments (52),
ii) classifying the at least one segment (52) of the at least one image (5) as pertaining to:
- the interior (11) of the vehicle (1), which correspond to the interior of the passenger compartment of the vehicle (1),
- the area outside (12) the vehicle (1), which correspond to the outside of the passenger compartment of the vehicle (1),
- an additional object (13) of the vehicle (1), which correspond to additional objects located inside the vehicle (1),
iii) modifying the at least one segment (52) based on the classification of the at least one segment (52),
iv) generating a virtual environment for displaying to the user (2), in which the virtual environment comprises at least one virtual segment (6) based on at least one segment (52) and at least one virtual segment (6) based on the modified segment (52), and
v) displaying the virtual environment generated by means of the virtual reality device (3).

2. Method according to Claim 1, in which the step of classifying the at least one segment (52) is based on a location of at least one element of the environment of the user (2) with respect to the virtual reality device (3), in which the method further comprises the steps of:
a) obtaining at least one real vector (23), in which the at least one real vector (23) comprises a modulus and a direction between the virtual reality device (3) and the at least one element of the environment of the user (2),
b) determining a position of the virtual reality device (3) in the vehicle (1),
c) assigning the at least one real vector (23) to the at least one segment (52), and
d) comparing the at least one real vector (23) with at least one theoretical vector (24), in which the at least one theoretical vector (24) is already known.

3. Method according to Claim 2, in which the at least one theoretical vector (24) is based on a layout of the passenger compartment of the vehicle (1) and the position of the virtual reality device (3) in the vehicle (1), in which the layout of the passenger compartment of the vehicle (1) is already known.

4. Method according to Claim 2, comprising an additional step of determining at least one window zone (15) in the at least one captured image (5), in which the step of determining the at least one window zone (15) comprises recognizing at least one predefined geometric shape by means of image processing and/or determining at least one marker on the at least one image (5), in which the marker comprises a predefined colour, and/or comparing the at least one real vector (23) with the at least one theoretical vector (24).

5. Method according to Claim 4, in which the at least one segment (52) is classified as pertaining to outside (12) the vehicle (1) if the at least one segment (52) is arranged in the at least one window zone (15) in the at least one image (5).

6. Method according to Claim 2, in which the at least one segment (52) is classified as pertaining to the interior (11) of the vehicle (1) if the real vector (23) of the at least one segment (52) is substantially equal to the theoretical vector (24).

7. Method according to Claim 2, in which the at least one segment (52) is classified as pertaining to an additional object (13) located inside the vehicle (1) if the modulus of the real vector (23) of the at least one segment (52) is less than the modulus of the theoretical vector (24).

8. Method according to Claim 1, in which the step of generating a virtual environment comprises superposing the at least one virtual segment (6) corresponding to the at least one vehicle (1) additional object (13) segment (52) on the at least one vehicle (1) interior (11) segment (52), and comprises superposing the at least one virtual segment (6) corresponding to the at least one vehicle (1) additional object (13) segment (52) on the at least one vehicle (1) outside (12) segment (52).

9. Method according to Claim 8, in which modifying the at least one vehicle (1) additional object (13) segment (52) comprises changing a colour, a texture and/or a shape of the at least one segment (52), such that a design of the additional object (13) is changed in the virtual environment displayed by the virtual reality device (3).

10. Method according to Claim 8, in which the step of generating a virtual environment of the user (2) comprises adding at least one additional object (13) in the virtual environment, in which the at least one additional object (13) replaces the at least one vehicle (1) interior (11) segment (52) and/or the at least one vehicle (1) outside (12) segment (52).

11. Method according to any of the preceding claims, in which modifying the at least one vehicle (1) interior (11) segment (52) comprises changing a colour, a texture and/or a shape of the at least one segment (52), so that a design of a passenger compartment of the vehicle (1) is changed in the virtual environment displayed by the virtual reality device (3).

12. Method according to any of the preceding claims, which comprises an additional step of capturing at least one external image (8) of an environment of the vehicle (1), and in which modifying the at least one vehicle (1) interior (11) segment (52) comprises replacing the at least one interior (11) segment (52) of the at least one image (5) with at least one section of the external image (8) of the environment of the vehicle (1), in which the at least one section of the external image (8) coincides with the field of vision (22) of the user (2) taken up by the at least one replaced segment (52).

13. Method according to any of the preceding claims, in which modifying the at least one vehicle (1) outside (12) segment (52) comprises changing a colour, brightness, luminosity, contrast and/or saturation of the at least one segment (52), so that a view of the area outside the vehicle (1) is changed in the virtual environment displayed by the virtual reality device (3).

14. Method according to any of the preceding claims, which comprises an additional step of capturing at least one second image by means of at least one second camera (14), in which the at least one second camera (14) comprises night vision and/or a wide-angle lens, and in which modifying the at least one vehicle (1) outside (12) segment (52) comprises replacing the at least one segment (52) of the at least one image (5) with at least one section of the second image captured by the at least one second camera (14), in which the at least one section of the second image captured coincides with the field of vision (22) of the user (2) taken up by the at least one replaced segment (52).

15. Method according to any of the preceding claims, **characterized in that** the step of generating a virtual environment of the user (2) comprises incorporating at least one item of additional virtual information.

16. System for displaying virtual reality information in a vehicle (1), in which the system comprises:
- a virtual reality device (3), in which the virtual reality device (3) comprises at least one screen, and the virtual reality device (3) is used by a user (2) inside the vehicle (1) to see an user's environment through the virtual reality images displayed to the user by means of the virtual reality device (3),
- at least one first camera (31), in which the at least one first camera (31) is configured to capture at least one image (5), in which the at least one image (5) coincides with a field of vision (22) of the user (2),
- at least one processing unit (4), in which the at least one processing unit (4) is configured to divide at least one image (5) captured into at least three segments (52), and is configured to classify the at least one segment (52) of the at least one image (5) of the interior (11) of the vehicle (1), area outside (12) the vehicle (1) and additional object (13) of the vehicle (1), and in which the at least one processing unit (4) is configured to modify the at least one segment (52) of the at least one image (5) based on the classification of the at least one segment (52), and in which the at least one processing unit (4) is configured to generate a virtual environment for displaying to the user (2), in which the virtual environment comprises the at least one virtual segment (6) based on at least one segment (52), and at least one virtual segment (6) based on the modified segment (52).

17. System according to Claim 16, **characterized in that** it comprises at least one position detection means (7), in which the position detection means (7) is configured to determine a position of the virtual reality device (3) in the vehicle (1).

18. System according to one of Claims 16 and 17, **characterized in that** it comprises at least one distance sensor (9), in which the at least one distance sensor (9) is configured to obtain at least one real vector (23), in which the at least one real vector (23) comprises a modulus and a direction between the virtual reality device (3) and the at least one element of the environment of the user (2).

19. System according to one of Claims 16 to 18, **characterized in that** it comprises at least one memory unit (41), in which the at least one memory unit (41) comprises a layout of the interior (11) of the vehicle (1), so that at least one theoretical vector (24) is calculated on the basis of a layout of the passenger compartment of the vehicle (1) and the position of the virtual reality device (3) in the vehicle (1).

## Patentansprüche

1. Methode zum Darstellen von Virtual-Reality-Daten in einem Fahrzeug (1), wobei ein Virtual-Reality-Gerät (3) von einem Benutzer (2) in einem Fahrzeug (1) verwendet wird, um die Umgebung des Benutzers anhand von Virtual-Reality--Bildern anzuzeigen, die dem Benutzer vom Virtual-Reality-Gerät (3) angezeigt werden, die sich dadurch auszeichnet, dass die Methode die folgenden Schritte umfasst:
i) Erfassen mindestens eines Bilds (5) der Umgebung des Benutzers (2), wobei das mindestens eine mit mindestens einer ersten Kamera (31) erfasste Bild (5) mit dem Sichtfeld (22) des Benutzers (2) übereinstimmt, wobei das mindestens eine erfasste Bild (5) in mindestens drei Segmente (52) unterteilt wird,
ii) Klassifizieren des mindestens einen Segments (52) des mindestens einen Bilds (5) als zugehörig zu:
- dem Innenraum (11) des Fahrzeugs (1), der dem Innenraum des Fahrgastraums des Fahrzeugs (1) entspricht
- dem Bereich außerhalb (12) des Fahrzeugs (1), der der äußeren Umgebung des Fahrgastraums des Fahrzeugs (1) entspricht,
- einem zusätzlichen Objekt (13) des Fahrzeugs (1), das zusätzlichen Objekten im Fahrzeug (1) entspricht,
iii) Verändern des mindestens einen Segments (52) beruhend auf der Klassifizierung des mindestens einen Segments (52),
iv) Erzeugen einer virtuellen Umgebung, die dem Benutzer (2) angezeigt werden kann, wobei die virtuelle Umgebung mindestens ein auf mindestens einem Segment (52) beruhendes virtuelles Segment (6) sowie mindestens ein auf dem veränderten Segment (52) beruhendes virtuelles Segment (6) umfasst, und
v) Darstellen der vom Virtual-Reality-Gerät (3) erzeugten virtuellen Umgebung.

2. Methode gemäß Anspruch 1, wobei das Klassifizieren des mindestens einen Segments (52) auf der Position mindestens eines Elements in der Umgebung des Benutzers (2) in Bezug auf das Virtual-Reality-Gerät (3) beruht, wobei die Methode zudem folgende Schritte umfasst:
a) Abrufen mindestens eines realen Vektors (23), wobei der mindestens eine reale Vektor (23) ein Modul und eine Richtung zwischen dem Virtual-Reality-Gerät (3) und dem mindestens einen Element in der Umgebung des Benutzers (2) umfasst,
b) Ermitteln der Position des Virtual-Reality-Geräts (3) im Fahrzeug (1),
c) Zuweisen des mindestens einen realen Vektors (23) zum mindestens einen Segment (52), und
d) Vergleichen des mindestens einen realen Vektors (23) mit mindestens einem theoretischen Vektor (24), wobei der mindestens eine theoretische Vektor (24) bereits bekannt ist.

3. Methode gemäß Anspruch 2, wobei der mindestens eine theoretische Vektor (24) auf einem Layout des Fahrgastraums des Fahrzeugs (1) und der Position des Virtual-Reality-Geräts (3) im Fahrzeug (1) beruht, wobei das Layout des Fahrgastraums des Fahrzeugs (1) bereits bekannt ist.

4. Methode gemäß Anspruch 2, die zudem das Ermitteln mindestens eines Fensterbereichs (15) im mindestens einen erfassten Bild (5) umfasst, wobei das Ermitteln des mindestens einen Fensterbereichs (15) das Erkennen mindestens einer vordefinierten geometrischen Form mithilfe einer Bildverarbeitung und/oder das Ermitteln mindestens einer Kennzeichnung im mindestens einen Bild (5) umfasst, wobei die Kennzeichnung eine vorab festgelegte Farbe aufweist, und/oder Vergleichen des mindestens einen realen Vektors (23) mit dem mindestens einen theoretischen Vektor (24).

5. Methode gemäß Anspruch 4, wobei das mindestens eine Segment (52) als zur äußeren Umgebung (12) des Fahrzeugs (1) gehörend klassifiziert wird, wenn sich das mindestens eine Segment (52) im mindestens einen Fensterbereich (15) des mindestens einen Bilds (5) befindet.

6. Methode gemäß Anspruch 2, wobei das mindestens eine Segment (52) als zum Innenraum (11) des Fahrzeugs (1) gehörend klassifiziert wird, wenn der reale Vektor (23) des mindestens einen Segments (52) im Wesentlichen dem theoretischen Vektor (24) entspricht.

7. Methode gemäß Anspruch 2, wobei das mindestens eine Segment (52) als zu einem zusätzlichen, im Innenraum (11) des Fahrzeugs (1) befindlichen Objekt (13) gehörend klassifiziert wird, wenn das Modul des realen Vektors (23) des mindestens einen Segments (52) kleiner ist als das Modul des theoretischen Vektors (24).

8. Methode gemäß Anspruch 1, wobei das Erzeugen einer virtuellen Umgebung das Überlagern des mindestens einen virtuellen Segments (6), das dem mindestens einen Segment (52) des zusätzlichen Objekts (13) des Fahrzeugs (1) entspricht, über das mindestens eine Segment (52) des Innenraums (11) des Fahrzeugs (1) umfasst, und wobei es das Überlagern des mindestens einen virtuellen Segments (6), das dem mindestens einen Segment (52) des zusätzlichen Objekts (13) des Fahrzeugs (1) entspricht, über das mindestens eine Segment (52) der äußeren Umgebung (12) des Fahrzeugs (1) umfasst.

9. Methode gemäß Anspruch 8, wobei das Verändern des mindestens einen Segments (52) des zusätzlichen Objekts (13) im Fahrzeug (1) das Verändern einer Farbe, einer Textur und/oder einer Form des mindestens einen Segments (52) umfasst, sodass das Design des zusätzlichen Objekts (13) in der vom Virtual-Reality-Gerät (3) angezeigten virtuellen Umgebung verändert wird.

10. Methode gemäß Anspruch 8, wobei das Erzeugen einer virtuellen Umgebung des Benutzers (2) das Hinzufügen mindestens eines zusätzlichen Objekts (13) zur virtuellen Umgebung umfasst, wobei das mindestens eine zusätzlichen Objekt (13) das mindestens eine Segment (52) des Innenraums (11) des Fahrzeugs (1) und/oder das mindestens eine Segment (52) der äußeren Umgebung (12) des Fahrzeugs (1) ersetzt.

11. Methode gemäß einem der vorherigen Ansprüche, wobei das Verändern des mindestens einen Segments (52) des Innenraums (11) des Fahrzeugs (1) das Verändern einer Farbe, einer Textur und/oder einer Form des mindestens einen Segments (52) umfasst, sodass das Design des Fahrgastraums des Fahrzeugs (1) in der vom Virtual-Reality-Gerät (3) angezeigten virtuellen Umgebung verändert wird.

12. Methode gemäß einem der vorherigen Ansprüche, wobei diese zudem das Erfassen mindestens eines Außenbilds (8) der Umgebung des Fahrzeugs (1) umfasst, und wobei das Verändern des mindestens einen Segments (52) des Innenraums (11) des Fahrzeugs (1) das Ersetzen des mindestens einen Segments (52) des Innenraums (11) des mindestens einen Bilds (5) durch mindestens einen Ausschnitt des Außenbilds (8) der Umgebung des Fahrzeugs (1) umfasst, wobei der mindestens eine Ausschnitt des Außenbilds (8) mit dem von dem mindestens einen ersetzten Segment (52) erfassten Sichtfeld (22) des Benutzers (2) übereinstimmt.

13. Methode gemäß einem der vorherigen Ansprüche, wobei das Verändern des mindestens einen Segments (52) der äußeren Bereichs (12) des Fahrzeugs (1) das Verändern der Farbe, der Helligkeit, der Lichtstärke, der Kontrast und/oder der Sättigung des mindestens einen Segments (52) umfasst, sodass die Ansicht der äußeren Umgebung des Fahrzeugs (1) in der vom Virtual-Reality-Gerät (3) angezeigten virtuellen Umgebung verändert wird.

14. Methode gemäß einem der vorherigen Ansprüche,die zudem das Erfassen mindestens eines zweiten Bilds mit mindestens einer zweiten Kamera (14) umfasst, wobei die mindestens eine zweite Kamera (14) ein Nachtsichtgerät und/oder ein Weitwinkelobjektiv umfasst, und wobei das Verändern des mindestens einen Segments (52) der äußeren Umgebung (12) des Fahrzeugs (1) das Ersetzen des mindestens einen Segments (52) des mindestens einen Bilds (5) durch mindestens einen Ausschnitt des mit der mindestens einen zweiten Kamera (14) erfassten zweiten Bilds, wobei der mindestens eine Ausschnitt des zweiten erfassten Bilds mit dem von dem mindestens einen ersetzten Segment (52) erfassten Sichtfeld (22) des Benutzers (2) übereinstimmt.

15. Methode gemäß einem der vorherigen Ansprüche, wobei das Erzeugen der virtuellen Umgebung des Benutzers (2) das Integrieren mindestens einer zusätzlichen virtuellen Information umfasst.

16. System zum Darstellen von Virtual-Reality-Daten in einem Fahrzeug (1), wobei das System Folgendes umfasst:
- ein Virtual-Reality-Gerät (3), wobei das Virtual-Reality-Gerät (3) mindestens einen Bildschirm umfasst, und wobei das Virtual-Reality-Gerät (3) von einem Benutzer (2) in einem Fahrzeug (1) verwendet wird, um die Umgebung des Benutzers anhand von Virtual-Reality--Bildern anzuzeigen, die dem Benutzer vom Virtual-Reality-Gerät (3) angezeigt werden,
- mindestens eine erste Kamera (31), wobei die mindestens eine erste Kamera (31) mindestens ein Bild (5) erfasst, wobei das mindestens eine Bild (5) mit dem Sichtfeld (22) des Benutzers (2) übereinstimmt,
- mindestens eine Verarbeitungseinheit (4), wobei die mindestens eine Verarbeitungseinheit (4) das mindestens eine erfasste Bild (5) in mindestens drei Segmente (52) unterteilt und das mindestens eine Segment (52) des mindestens einen Bilds (5) dem Innenraum (11) des Fahrzeugs (1), der äußeren Umgebung (12) des Fahrzeugs (1) und einem zusätzlichen Objekt (13) des Fahrzeugs (1) zuweist, und wobei die mindestens eine Verarbeitungseinheit (4) das mindestens eine Segment (52) des mindestens einen Bilds (5) beruhend auf der Klassifizierung des mindestens einen Segments (52) verändert, und wobei die mindestens eine Verarbeitungseinheit (4) eine virtuelle Umgebung erzeugt, die dem Benutzer (2) angezeigt wird, wobei die virtuelle Umgebung mindestens das auf mindestens einem Segment (52) beruhende virtuelle Segment (6) sowie mindestens ein auf dem veränderten Segment (52) beruhendes virtuelles Segment (6) umfasst.

17. System gemäß Anspruch 16, das sich dadurch auszeichnet, dass es mindestens eine Positionserkennungsvorrichtung (7) umfasst, wobei die Positionserkennungsvorrichtung (7) die Position des Virtual-Reality-Geräts (3) im Fahrzeug (1) ermittelt.

18. System gemäß einem der Ansprüche 16 und 17, das sich dadurch auszeichnet, dass es mindestens einen Abstandssensor (9) umfasst, wobei der mindestens eine Abstandssensor (9) mindestens einen realen Vektor (23) abruft, wobei der mindestens eine reale Vektor (23) ein Modul und eine Richtung zwischen dem Virtual-Reality-Gerät (3) und dem mindestens einen Element in der Umgebung des Benutzers (2) umfasst.

19. System gemäß einem der Ansprüche 16 bis 18, das sich dadurch auszeichnet, dass es mindestens eine Speichereinheit (41) umfasst, wobei die mindestens eine Speichereinheit (41) ein Layout des Innenraums (11) des Fahrzeugs (1) umfasst, sodass mindestens ein theoretischer Vektor (24) anhand des Layouts des Fahrgastraums des Fahrzeugs (1) sowie der Position des Virtual-Reality-Geräts (3) im Fahrzeug (1) berechnet wird.

## Revendications

1. Procédé pour afficher des informations de réalité virtuelle dans un véhicule (1), dans lequel le dispositif de réalité virtuel (3) est utilisé par un utilisateur (2) à l'intérieur du véhicule (1) pour voir un environnement de l'utilisateur à travers les images de réalité virtuelle affichées à l'utilisateur au moyen du dispositif de réalité virtuelle (3), **caractérisé en ce que** le procédé comprend les étapes suivantes:
i) capturer au moins une image (5) de l'environnement de l'utilisateur (2), dans lequel au moins une image (5) capturée au moyen d'au moins une première caméra (31) coïncide avec un champ de vision (22) de l'utilisateur (2), dans lequel au moins une image (5) capturée est divisée en au moins trois segments (52),
ii) classifier au moins un segment (52) d'au moins une image (5) comme appartenant à:
- l'intérieur (11) du véhicule (1), qui correspond à l'intérieur du compartiment passager du véhicule (1),
- la zone extérieure (12) du véhicule (1), qui correspond à l'extérieur du compartiment passager du véhicule (1),
- un objet additionnel (13) du véhicule (1), qui correspond aux objets additionnels placés à l'intérieur du véhicule (1),
iii) modifier au moins un segment (52) sur la base de la classification d'au moins un segment (52),
iv) générer un environnement virtuel pour afficher à l'utilisateur (2), dans lequel l'environnement virtuel comprend au moins un segment virtuel (6) sur la base d'au moins un segment (52) et au moins un segment virtuel (6) sur la base du segment modifié (52), et
v) afficher l'environnement virtuel généré au moyen du dispositif de réalité virtuelle (3).

2. Procédé selon la revendication 1, dans lequel l'étape de classification d'au moins un segment (52) se base sur un emplacement d'au moins un élément de l'environnement de l'utilisateur (2) par rapport au dispositif de réalité virtuelle (3), dans lequel le procédé comprend en outre les étapes suivantes:
a) obtenir au moins un vecteur réel (23), dans lequel au moins un vecteur réel (23) comprend un module et une direction entre le dispositif de réalité virtuelle (3) et au moins un élément de l'environnement de l'utilisateur (2),
b) déterminer une position du dispositif de réalité virtuelle (3) dans le véhicule (1),
c) assigner au moins un vecteur réel (23) à au moins un segment (52), et
d) comparer au moins un vecteur réel (23) avec au moins un vecteur théorique (24) dans lequel au moins un vecteur théorique (24) est déjà connu.

3. Procédé selon la revendication 2, dans lequel au moins un vecteur théorique (24) se base sur une configuration du compartiment passager du véhicule (1) et sur la position du dispositif de réalité virtuelle (3) dans le véhicule (1), dans lequel la configuration du compartiment passager du véhicule (1) est déjà connue.

4. Procédé selon la revendication 2, comprenant une étape additionnelle de détermination d'au moins une zone de fenêtre (15) dans au moins une image capturée (5), dans lequel l'étape de détermination d'au moins une zone de fenêtre (15) comprend la reconnaissance au moins une forme géométrique prédéfinie au moyen du traitement d'image et/ou de détermination d'au moins un marqueur sur au moins une image (5), dans lequel le marqueur comporte une couleur prédéfinie et/ou de comparaison d'au moins un vecteur réel (23) avec au moins un vecteur théorique (24).

5. Procédé selon la revendication 4, dans lequel au moins un segment (52) est classifié comme appartenant à l'extérieur (12) du véhicule (1) si au moins un segment (52) est placé dans au moins une zone de fenêtre (15) dans au moins une image (5).

6. Procédé selon la revendication 2, dans lequel au moins un segment (52) est classifié comme appartenant à l'intérieur (11) du véhicule (1) si le vecteur réel (23) d'au moins un segment (52) est sensiblement égal au vecteur théorique (24).

7. Procédé selon la revendication 2, dans lequel au moins un segment (52) est classifié comme appartenant à un objet additionnel (13) placé à l'intérieur du véhicule (1) si le module du vecteur réel (23) d'au moins un segment (52) est inférieur au module du vecteur théorique (24).

8. Procédé selon la revendication 1, dans lequel l'étape de génération d'un environnement virtuel comprend la superposition d'au moins un segment virtuel (6) correspondant à au moins un segment (52) d'un objet additionnel (13) d'au moins un véhicule (1) sur au moins un segment (52) à l'intérieur (11) du véhicule (1) et comprend la superposition d'au moins un segment virtuel (6) correspondant à au moins un segment (52) d'un objet additionnel (13) du véhicule (1) sur au moins un segment (52) à l'extérieur (12) du véhicule (1).

9. Procédé selon la revendication 8, dans lequel la modification d'au moins un segment (52) d'un objet additionnel (13) du véhicule (1) comprend le changement d'une couleur, d'une texture et/ou d'une forme d'au moins un segment (52), de sorte qu'une conception de l'objet additionnel (13) est modifiée dans l'environnement virtuel affiché par le dispositif de réalité virtuelle (3).

10. Procédé selon la revendication 8, dans lequel l'étape de génération d'un environnement virtuel de l'utilisateur (2) comprend l'ajout d'au moins un objet additionnel (13) dans l'environnement virtuel dans lequel au moins un objet additionnel (13) remplace au moins un segment (52) à l'intérieur (11) du véhicule (1) et/ou au moins un segment (52) à l'extérieur (12) du véhicule (1).

11. Procédé selon l'une quelconque des revendications précédentes, dans lequel la modification d'au moins un segment (52) à l'intérieur (11) du véhicule (1) comprend le changement d'une couleur, d'une texture et/ou d'une forme d'au moins un segment (52), de sorte qu'une conception d'un compartiment passager du véhicule (1) est modifiée dans l'environnement virtuel affiché par le dispositif de réalité virtuelle (3).

12. Procédé selon l'une quelconque des revendications précédentes, qui comprend une étape additionnelle de capture d'au moins une image externe (8) d'un environnement du véhicule (1), et dans lequel la modification d'au moins un segment (52) à l'intérieur (11) du véhicule (1) comprend le remplacement d'au moins un segment (52) à l'intérieur (11) d'au moins une image (5) avec au moins une section de l'image externe (8) de l'environnement du véhicule (1), dans lequel au moins une section de l'image externe (8) coïncide avec le champ de vision (22) de l'utilisateur (2) repris par au moins un segment remplacé (52).

13. Procédé selon l'une quelconque des revendications précédentes, dans lequel la modification d'au moins un segment (52) à l'extérieur (12) du véhicule (1) comprend le changement d'une couleur, d'une brillance, d'une luminosité, d'un contraste et/ou saturation d'au moins un segment (52), de sorte qu'une vue de la zone à l'extérieur du véhicule (1) est modifiée dans l'environnement virtuel affiché par le dispositif de réalité virtuelle (3).

14. Procédé selon l'une quelconque des revendications précédentes, qui comprend une étape additionnelle de capture d'au moins une seconde image au moyen d'au moins une seconde caméra (14), dans lequel au moins une seconde caméra (14) comprend la vision nocturne et/ou un objectif de grand angle, et dans lequel la modification d'au moins un segment (52) à l'extérieur (12) du véhicule (1) comprend le remplacement d'au moins un segment (52) d'au moins une image (5) avec au moins une section de la seconde image capturée par au moins une seconde caméra (14), dans lequel au moins une section de la seconde image capturée coïncide avec le champ de vision (22) de l'utilisateur (2) repris par au moins un segment remplacé (52).

15. Procédé selon l'une quelconque des revendications précédentes, **caractérisé en ce que** l'étape de génération d'un environnement virtuel de l'utilisateur (2) comprend l'incorporation d'au moins un élément des informations virtuelles additionnelles.

16. Système pour afficher des informations de réalité virtuelle dans un véhicule (1), dans lequel le système comprend:
- un dispositif de réalité virtuelle (3), dans lequel le dispositif de réalité virtuelle (3) comprend au moins un écran et le dispositif de réalité virtuelle (3) est utilisé par un utilisateur (2) à l'intérieur du véhicule (1) pour voir un environnement de l'utilisateur à travers les images de réalité virtuelle affichées à l'utilisateur au moyen du dispositif de réalité virtuelle (3),
- au moins une première caméra (31), dans lequel au moins une première caméra (31) est configurée pour capturer au moins une image (5), dans lequel au moins une image (5) coïncide avec un champ de vision (22) de l'utilisateur (2),
- au moins une unité de traitement (4), dans lequel au moins une unité de traitement (4) est configurée pour diviser au moins une image (5) capturée dans au moins trois segments (52), et est configurée pour classifier au moins un segment (52) d'au moins une image (5) de l'intérieur (11) du véhicule (1), la zone à l'extérieur (12) du véhicule (1) et l'objet additionnel (13) du véhicule (1), et dans lequel au moins une unité de traitement (4) est configurée pour modifier au moins un segment (52) d'au moins une image (5) sur la base de la classification d'au moins un segment (52), et dans lequel au moins une unité de traitement (4) est configurée pour générer un environnement virtuel pour afficher à l'utilisateur (2), dans lequel l'environnement virtuel comprend au moins un segment virtuel (6) sur la base d'au moins un segment (52), et au moins un segment virtuel (6) sur la base du segment modifié (52).

17. Système selon la revendication 16, **caractérisé en ce qu'**il comprend au moins un moyen de détection de position (7), dans lequel le moyen de détection de position (7) est configuré pour déterminer une position du dispositif de réalité virtuelle (3) dans le véhicule (1).

18. Système selon les revendications 16 et 17, **caractérisé en ce qu'**il comprend au moins un capteur de distance (9) dans lequel au moins un capteur de distance (9) est configuré pour obtenir au moins un vecteur réel (23), dans lequel au moins un vecteur réel (23) comprend un module et une direction entre le dispositif de réalité virtuelle (3) et au moins un élément de l'environnement de l'utilisateur (2).

19. Système selon l'une des revendications 16 à 18, **caractérisé en ce qu'**il comprend au moins une unité mémoire (41), dans lequel au moins une unité mémoire (41) comprend une configuration de l'intérieur (11) du véhicule (1), de sorte qu'au moins un vecteur théorique (24) est calculé sur la base d'une configuration du compartiment passager du véhicule (1) et la position de dispositif de réalité virtuelle (3) dans le véhicule (1).
